# EUROPEAN PATENT SPECIFICATION

(11) **EP 2 935 288 B1**
(45) Date of publication and mention of the grant of the patent: **19.10.2016**
(21) Application number: 13814112.2
(22) Date of filing: 18.12.2013
(51) Int. Cl.: C07F 7/18, C09D 183/04

(54) **SILYL ESTER COPOLYMER**
SILYLESTERCOPOLYMER
COPOLYMÈRE D'ESTER DE SILYL

(30) Priority: 19.12.2012 EP 12198266
(43) Date of publication of application: 28.10.2015
(73) Proprietor: Jotun A/S, 3202 Sandefjord (NO)
(72) Inventor: DAHLING, Marit, N-3218 Sandefjord (NO)
(74) Representative: Campbell, Neil Boyd
(86) International application number: PCT/EP2013/077239
(87) International publication number: WO 2014/096102

(56) References cited:
- EP-A2- 1 203 772
- US-A1- 2002 128 503

## Description

### Field of Invention

The present invention relates to antifouling coating compositions with controlled hydrolysis rates and with good mechanical properties, e.g. resistance to cracking. In particular, the invention relates to the use of certain silyl ester monomers in the formation of silyl ester copolymers which offer attractive hydrolysis properties and hence polishing properties. The invention also relates to surfaces coated in said antifouling coating compositions. The silyl ester copolymer itself and processes for making it form a still yet further aspect of the invention.

### Background of Invention

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the surface roughness and thereby the frictional resistance which will cause reduced speed and/or increased fuel consumption. Fouling can also result in reduced manoeuvrability.

To prevent settlement and growth of marine organisms antifouling coatings are used. These coating compositions generally comprise a film-forming binder, together with different components such as pigments, fillers, solvents and biologically active substances.

One broad group of biocidal antifouling coatings on the market today is the self-polishing antifouling coatings. Those antifouling coatings are based on (meth)acrylic copolymers having pendant hydrolysable groups. In seawater the polymer will gradually degrade by hydrolysis of pendant groups on the polymer backbone. The remaining (meth)acrylic copolymer, now containing pendant carboxylic acid groups, becomes hydrophilic and sufficiently soluble or dispersible in seawater to be washed out or eroded away from the coating surface. This controlled dissolution or self-polishing effect provided a controlled release of the biologically active compounds in the coating resulting in the excellent antifouling efficiency and smooth surfaces and hence reduced frictional resistance.

The most successful self-polishing antifouling systems today are based on silyl ester functional (meth)acrylic copolymers. These coating compositions are for example described in, EP0646630, EP0802243, WO00/77102, WO03/070832 EP1342756, WO2005005516 and WO2009007276.

The first generation silyl ester copolymers developed contained linear alkyl substituents on the hydrolysable silyl group, such as tri-n-butylsilyl esters. The copolymers hydrolysed extremely fast making it difficult to control the polishing rate of the antifouling coating film. The storage stability of the coating formulation was also poor.

The second generation silyl ester copolymers contained branched alkyl substituents on the hydrolysable silyl group, such as triisopropylsilyl esters. The branched alkyl substituents reduced the hydrolysis rate and the availability of the silyl ester bond for hydrolysis. In temperate and tropical waters the initial polishing rates of the antifouling coating film containing the triisopropylsilyl ester copolymer are constant, but tend to gradually increase over time and become excessively high.

As a result, it has proved difficult to design good second generation coatings with predictable polishing rates. Cracking of exposed coating film was also often observed in these second generation coatings. In order to improve the polishing and mechanical properties, co-binders such as rosin, rosin derivatives and plasticizers were used as described in, for example, EP0802243, WO03/070832, EP 1342756, EP2128208 and EP2360214.

Recently, more bulky substituents have been introduced on the hydrolysable silyl group to try to overcome the weaknesses of the triisopropylsilyl ester technology. Specifically, silyl monomers which possessed slower hydrolysis rates were developed. For example, EP1238980 discloses silyl(meth)acrylates with bulky C₃₋₁₀ hydrocarbon groups on the hydrolysable silyl group. These compounds are more stable to hydrolysis than the triisopropylsilyl (meth)acrylates. WO2012/026237 discloses copolymers of t-butyldiphenylsilyl acrylate which is more stable than the copolymers of triisopropylsilyl (meth)acrylate.

There remains, however, a need to develop new silyl ester copolymers which combine a controlled hydrolysis rate with controlled polishing properties of the antifouling coating film, ideally without the need for co-binders, as well as providing good mechanical properties of the antifouling coating film, e.g. in terms of cracking resistance.

The present inventors have surprisingly found that silyl ester copolymers, in which a mixture of small and bulky alkyl groups are attached to the hydrolysable silyl group, possess the above-mentioned attributes. These represent a compromise between the rapidly hydrolysing first generation silyl ester copolymers with their linear substituents and the multiple bulky substituents of the second generation materials. By using bulky and non bulky substituents on the silicon atom, advantageous hydrolysis rates have been achieved.

In JP 62178593 and JP 62179514 a dimethylhexylsilyl (meth)acrylate monomer is discussed. The use however, of a linear hexyl group as opposed to the multiply branched group required herein is significant (as noted in our examples below). The monomers in this JP prior art are more akin to the first generation coatings discussed above.

The present inventors are the first to identify a particular monomer for use in the formation of silyl ester copolymers based on two methyl or ethyl substituents and one multiply branched substituent, in particular thexyl, which are ideal for use in the manufacture of binders for anti-fouling paint compositions.

### Summary of Invention

Thus, viewed from one aspect the invention provides a silyl ester copolymer comprising the reaction product of a monomer of formula (I) 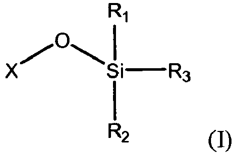
wherein X is acryloyloxy group, methacryloyloxy group, (methacryloyloxy)alkylcarboxy group, (acryloyloxy)alkylcarboxy group, maleinoyloxy group, fumaroyloxy group, itaconoyloxy group or citraconoyloxy group;
R₁ is a methyl or ethyl group;
R₂ is a methyl or ethyl group;
R₃ is a branched C5-8 alkyl group having at least two branches, e.g. at the same carbon atom or at two carbon atoms or more;
with at least one non silyl ester monomer, e.g. methyl methacrylate.

Viewed from another aspect the invention provides a process for the preparation of a silyl ester copolymer as hereinbefore defined comprising polymerising a monomer of formula (I) 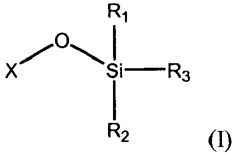
wherein X is acryloyloxy group, methacryloyloxy group, (methacryloyloxy)alkylcarboxy group, (acryloyloxy)alkylcarboxy group, maleinoyloxy group, fumaroyloxy group, itaconoyloxy group or citraconoyloxy group;
R₁ is a methyl or ethyl group;
R₂ is a methyl or ethyl group;
R₃ is a branched C5-8 alkyl group having at least two branches;
with at least one non silyl ester monomer, e.g. methyl methacrylate.

Viewed from another aspect the invention provides an antifouling coating composition comprising a silyl ester copolymer and an antifouling agent;
wherein said silyl ester copolymer comprises the reaction product of a monomer of formula (I) 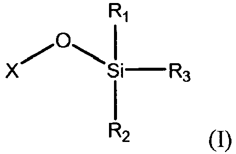
wherein X is acryloyloxy group, methacryloyloxy group, (methacryloyloxy)alkylcarboxy group, (acryloyloxy)alkylcarboxy group; maleinoyloxy group, fumaroyloxy group, itaconoyloxy group or citraconoyloxy group;
R₁ is a methyl or ethyl group;
R₂ is a methyl or ethyl group;
R₃ is a branched C5-8 alkyl group having at least two branches;
with at least one non silyl ester monomer, e.g. methyl methacrylate.

Viewed from another aspect the invention provides a process for protecting an object from fouling comprising coating at least a part of said object which is subject to fouling with an anti-fouling coating composition as hereinbefore described.

Viewed from another aspect the invention provides an object coated with an anti-fouling coating composition as hereinbefore defined.

Viewed from another aspect the invention provides the use of an antifouling coating composition as hereinbefore defined to protect a surface from marine fouling.

### Definitions

The term thexyl as used herein means 2,3-dimethyl-2-butyl which is the same as 1,1,2-trimethylpropyl, i.e. the group:

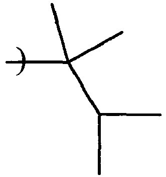

The terms "(methacryloyloxy)alkylcarboxy" and "(acryloyloxy)alkylcarboxy" used in the context of the present invention mean the groups: 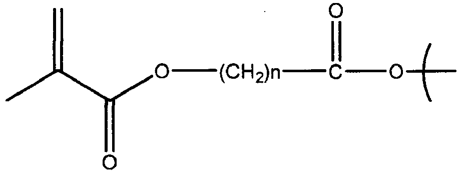 and 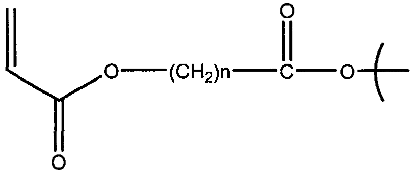 respectively, wherein n may be an integer of 1 or more, such as 1 to 6. It will be appreciated that the above structures could also be referred to as "(methacryloyloxy)alkylacyloxy" and "(acryloyloxy)alkylacyloxy", respectively, and thus in the context of this invention the terms "alkylcarboxy" and "alkylacyloxy" are interchangeable.

### Detailed Description

The antifouling coating composition of the current invention comprises a silyl ester copolymer formed through the polymerisation of a monomer of formula (I) with at least one non silyl ester comonomer. The term residue refers to the repeating unit formed during the polymerisation of the monomer (I) with any other monomers used in silyl ester copolymer formation.

The silyl ester copolymer of the invention can then be used as a binder in an anti-fouling coating composition.

### Monomers of formula (I)

The invention requires the use of a monomer of formula (I) 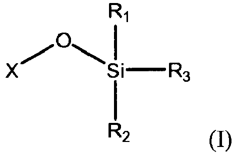
wherein X is acryloyloxy group, methacryloyloxy group, (methacryloyloxy)alkylcarboxy group, (acryloyloxy)alkylcarboxy group, maleinoyloxy group, fumaroyloxy group, itaconoyloxy group or citraconoyloxy group;
R₁ is a methyl or ethyl group;
R₂ is a methyl or ethyl group;
R₃ is a branched C5-8 alkyl group having at least two branches.

It is preferred if X is acryloyloxy group, methacryloyloxy group, (methacryloyloxy)alkylcarboxy group, (acryloyloxy)alkylcarboxy group, fumaroyloxy group, itaconoyloxy group or citraconoyloxy group.

It is more preferred if X is an acryloyloxy group, methacryloyloxy group, (methacryloyloxy)alkylcarboxy group or (acryloyloxy)alkylcarboxy group.

It is most preferred if X is an acryloyloxy or methacryloyloxy group.

Preferred monomers are those of formula (II) 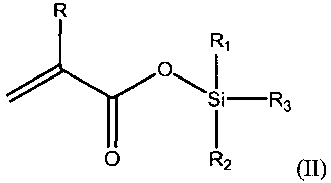
wherein R is H or methyl, preferably Me;
R₁ is a methyl or ethyl group;
R₂ is a methyl or ethyl group;
R₃ is a branched C5-8 alkyl group having at least two branches.

It is preferred that in any compound of formula (I) or (II), R₁ is a methyl group. It is preferred that in any compound of formula (I) or (II), R₂ is a methyl group. It is preferred if R₁ and R₂ are the same.

A preferred compound is therefore of formula (III) 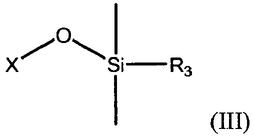 where X and R₃ are as hereinbefore defined.

Further preferred compounds are those of formula (IV) 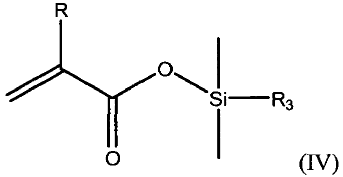 where R and R₃ are as hereinbefore defined.

The R₃ group comprises at least two branches. Those branches might be on the same carbon atom (thus forming a tertiary carbon centre) or on different carbon atoms. When both branches are present on the same carbon atom, it is preferred if the branches are on the carbon atom adjacent the Si atom. Such a compound may include therefore the group:

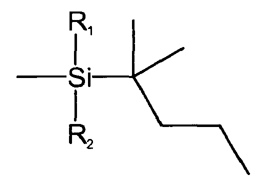

It is preferred that in any compound of formula (I) to (IV) that R₃ is a branched C5-8 alkyl group having branches at two carbons or more. Preferred branched groups R₃ have branches on two carbon atoms only. Preferred branched groups R₃ have C6-8 atoms. Preferred branched alkyl groups are 2,3-dimethyl-2-butyl (thexyl).

In a highly preferred embodiment therefore, the monomers of use in the formation of silyl ester copolymers of the invention are those of formula (V) 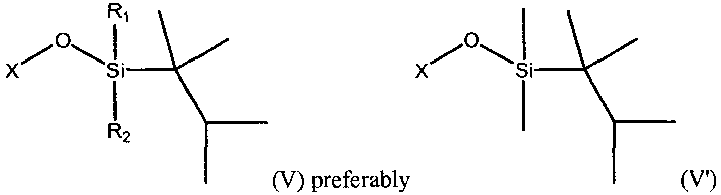 wherein X, R₁ and R₂ are as hereinbefore defined, especially a (meth)acrylate group, so as to form a compound of formula (VI): 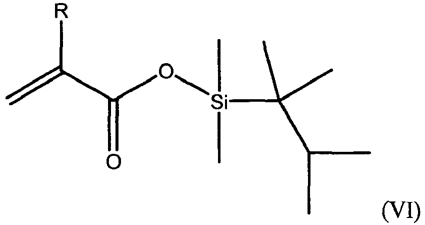 wherein R is H or Me, especially Me.

It is possible to use a mixture of monomers of formula (I) in any silyl ester copolymer of the invention. It is preferred however, if only one such monomer is employed in the silyl ester copolymer.

### Other monomers

The silyl ester copolymers of the invention comprise at least one silyl ester monomer of formula (I) copolymerised with at least one other polymerizable monomer other than a silyl ester monomer. That monomer is preferably a (meth)acrylate monomer. Examples thereof include (meth)acrylic acid and (meth)acrylic esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate, cyclohexyl (meth)acrylate, 4-tert-butylcyclohexyl (meth)acrylate, dicyclopentenyl (meth)acrylate, dicyclopentenyl oxyethyl (meth)acrylate, isobornyl (meth)acrylate, phenyl (meth)acrylate, benzyl (meth)acrylate, naphthyl (meth)acrylate, 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate, 2-methoxyethyl (meth)acrylate, 2-ethoxyethyl (meth)acrylate, 2-butoxyethyl (meth)acrylate, 2-phenoxyethyl (meth)acrylate, methyl diglycol (meth)acrylate, methyl triglycol (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate, 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(*tert*-butylamino)ethyl (meth)acrylate and lactone modified hydroxyalkyl (meth)acrylates such as caprolactone (meth)acrylate and others as described in WO2009149919.

The invention requires the use of particular silyl ester monomers to form the silyl ester copolymers of the invention but those monomers can, of course, be used in conjunction with other silyl ester monomers well known in the art. It is preferred however if the only silyl ester monomers present are those of formula (I) (or the preferred embodiments thereof discussed above).

Monomers containing the silyl ester functionality include silyl ester monomers of acrylic acid and methacrylic acid, such as triisopropylsilyl (meth)acrylate, tri-n-butylsilyl (meth)acrylate, triisobutylsilyl (meth)acrylate, tertbutyldimethylsilyl (meth)acrylate , n-octadecyldimethylsilyl (meth)acrylate, cyclohexyldimethylsilyl (meth)acrylate, phenyldimethylsilyl (meth)acrylate, benzyldimethylsilyl (meth)acrylate, n-butyldiisopropylsilyl (meth)acrylate, n-octyldiisopropylsilyl (meth)acrylate, tert-butyldiphenylsilyl (meth)acrylate, nonamethyltetrasiloxy_(meth)acrylate, bis(trimethylsiloxy)methylsilyl (meth)acrylate, tris(trimethylsiloxy)silyl (meth)acrylate; silyl ester monomers of maleic acid such as triisopropylsilyl methyl maleate, and triisipropylsilyl isoamyl maleate; silyl ester monomers of carboxyalkyl (meth)acrylate such as triisopropylsiloxycarbonylmethyl (meth)acrylate, triisobutylsiloxycarbonylmethyl (meth)acrylate, tert-butyldiphenylsiloxycarbonylmethyl (meth)acrylate; and others silyl ester monomers well known in the art e.g. as described in WO03/080747, EP1238980 and WO 2009007276.

Other examples of the polymerizable monomers which might be present in the silyl ester copolymers of the invention include esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;
vinyl esters such as vinyl acetate, vinyl propionate, vinyl butyrate, vinyl pivalate, vinyl dodecanoate, vinyl benzoate, vinyl 4-*tert*-butylbenzoate, VeoVa™ 9, VeoVa™ 10;
(meth)acrylamides such as *N*-propyl (meth)acrylamide, *N*-isopropyl (meth)acrylamide, N-*tert*-butyl (meth)acrylamide, *N*-phenyl (meth)acrylamide, *N-*methylol (meth)acrylamide, *N*-(isobutoxymethyl) (meth)acrylamide, *N*-[3-(dimethylamino)propyl] (meth)acrylamide, diacetone (meth)acrylamide, *N,N-*dimethyl (meth)acrylamide;
metal salts of acrylic acid and methacrylic acid and other metal functional monomers such as zinc (meth)acrylate, copper (meth)acrylate, zinc acetate (meth)acrylate, copper acetate (meth)acrylate, zinc versetate (meth)acrylate, copper versetate (meth)acrylate,zinc oleate (meth)acrylate, copper oleate (meth)acrylate; and others as described in EP1323745;
(meth)acrylonitrile, 2-(acetoacetoxy)ethyl (meth)acrylate and other monomers as described in WO96/41842 and US4593055;
maleimide and N-substituted maleimides such as maleimide, N-phenyl maleimide and others as described in WO96/41841;
N-vinyl lactams, N-vinyl amides such as N-vinyl pyrrolidone, and other lactam and amide functional monomers as described in EP1127902;
other vinyl monomers such as styrene, α-methyl styrene, vinyl toluene and *p*-chlorostyrene.

Preferred comonomers are 2-methoxyethyl (meth)acrylate, tetrahydrofurfuryl (meth)acrylate, 2-(2-ethoxyethoxy)ethyl (meth)acrylate, 2-(2-butoxyethoxy)ethyl (meth)acrylate, ethyl (meth)acrylate, n-butyl acrylate, 2-ethylhexyl acrylate and methyl (meth)acrylate. Most preferred comonomers are 2-methoxyethyl (meth)acrylate, tetrahydrofurfuryl (meth)acrylate, 2-(2-ethoxyethoxy)ethyl (meth)acrylate, ethyl (meth)acrylate, n-butyl acrylate, and methyl (meth)acrylate.

In producing the silyl ester copolymer containing silyl ester monomer residues, the proportion of at least one of monomers of formula (I) to at least one non silyl polymerizable monomer can be suitably determined according to the use of the coating composition. In general, however, the proportion of at least one of monomers of formula (I) is preferably from 1 to 99% by mole and that of at least one other monomer is preferably from 99 to 1% by mole. Preferably there is 15-60 % by mole of silyl ester monomer of formula (I), more preferably 20-40 % by mole of the total mixture of comonomers.

In wt% terms, 10 to 90 wt% silyl monomer is preferred, such as 15-60 wt% of silyl ester monomer, more preferably 20-60 wt% silyl monomer, such as 30 to 50 wt% silyl monomer based on the total mixture of comonomers.

The polymer containing silyl ester residues can be obtained by polymerizing such a monomer mixture in the presence of a polymerization catalyst by any of various methods such as solution polymerization, bulk polymerization, emulsion polymerization, and suspension polymerization in an ordinary way. In preparing a coating composition using this polymer containing silyl ester groups, the polymer is preferably diluted with an organic solvent to give a polymer solution having an appropriate viscosity. From this standpoint, it is desirable to employ solution polymerization or bulk polymerization.

Examples of the polymerization initiators include azo compounds such as azo compounds such as 2,2'-azobis(2-methylbutyronitrile), 2,2'-azobis(isobutyronitrile) and 1,1'-azobis(cyclohexanecarbonitrile) and peroxides such as *tert*-butyl peroxypivalate, *tert*-butyl peroxy-2-ethylhexanoate, *tert-butyl* peroxydiethylacetate, *tert*-butyl peroxyisobutyrate, di-*tert*-butyl peroxide, *tert*-butyl peroxybenozate, and *tert*-butyl peroxyisopropylcarbonate, *tert-amyl* peroxypivalate, *tert*-amyl peroxy-2-ethylhexanoate, 1,1-di(*tert*-amyl peroxy)cyclohexane and dibenzoyl peroxide. These compounds are used alone or as a mixture of two or more thereof.

Examples of the organic solvent include aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran,; ether alcohols such as 1-methoxy-2-propanol; aliphatic hydrocarbons such as white spirit; and optionally a mixture of two or more solvents. These compounds are used alone or as a mixture of two or more thereof.

The thus-obtained polymer containing silyl ester groups desirably has a weight-average molecular weight of from 1,000 to 100,000, preferably from 15,000 to 80,000, more preferably from 20,000 to 60,000. The solution of the polymer desirably has a viscosity of 5000 cP or lower, preferably 2000 cP or lower at 25°C. Values of less than 1000 cP, such as less than 500 cP are also achievable. Typically, the polymer solution viscosity is less than 1000 cP. For attaining such a viscosity, the polymer solution is desirably regulated so as to have a solid content of from 5 to 90% by weight, preferably from 15 to 85% by weight, more preferably from 40 to 75% by weight.

The glass transition temperature of the silyl ester copolymer of the invention may be 10 to 70°C, such as 20 to 70 °C.

The silyl ester copolymers of the invention can be used as a binder in an antifouling coating composition. It is possible to use the silyl ester copolymer binder of the present invention in combination with conventional binders such as silyl ester copolymer binders based on the polymerisation of monomers above and the non silyl monomers discussed above. It is preferred however, if the silyl ester copolymer of the invention forms the only binder employed in the anti-fouling coating compositions of the invention. It is a particular feature of the invention that the properties of the silyl ester copolymer binder of the invention can act alone as it provides ideal polishing properties.

It is also preferred if an anti-fouling coating composition of the invention is free from rosin or any derivative thereof. The use of rosins in anti-fouling paint compositions is common. Using the silyl ester copolymer binder of the invention, we can avoid the use of rosins in the paint. Thus rosin contents of less than 0.1 wt% are envisaged.

The inventors have found that by using the monomers of formula (I) along with different comonomers selected from the lists above, the polishing rate of the anti-fouling coating can be tailored as desired. In particular, the nature of the polishing properties are such that less silyl ester monomer of formula (I) can be employed in the binder than is required when conventional silyl ester monomers are used such as triisopropylsilyl. This is significant as the silyl ester comonomer is the more expensive monomer used in silyl ester copolymer manufacture. If less of it needs to be used to achieve, a desired result that the resulting silyl ester copolymer is cheaper than one containing higher amounts of silyl ester monomer.

We have found that the antifouling coating composition of the invention is generally sensitive to the silyl ester content in the binder. This means reducing or increasing the amount of the silyl ester monomer within the binder of the invention has significant implications for the properties of the anti-fouling coating.

The amount of silyl ester monomer within the silyl ester copolymer may be between 20 and 60 wt%, such as 30 and 50 wt%.

The amount of silyl ester copolymer of the invention present in any anti-fouling coating may be between 2 and 80 wt%, such as 5 and 50 wt% or 10 and 30 wt%. Note that these percentages refer to silyl ester copolymer per se and the amount of copolymer solution, whose solids content obviously varies depending on the solvent content.

In another embodiment, the present invention relates to the use of the silyl ester copolymer as binders in curable antifouling coating compositions. Curable coatings can be used to provide an antifouling coating composition with reduced levels of volatile organic compounds (VOC) and sufficiently low viscosity in order to be applied by common application methods.

The polymer containing silyl ester groups used for a curing composition desirably has a weight-average molecular weight of from 1,000 to 100,000, preferably from 1,000 to 50,000, more preferably from 2,000 to 20,000. The solution of the polymer desirably has a viscosity of 5000 cP or lower, preferably 2000 cP or lower at 25°C. Values of less than 1000 cP, such as less than 500 cP are also achievable. Typically, the polymer solution viscosity is less than 1000 cP. For attaining such a viscosity, the polymer solution is desirably regulated so as to have a solid content of from 5 to 90% by weight, preferably from 15 to 85% by weight, more preferably from 40 to 75% by weight.

Silyl ester copolymers may have functional groups that are reactive with curing agents such as chain extenders or crosslinkers. Examples of functional groups are epoxy, hydroxy, trialkoxysilyl, acetoactoxy and anhydride. The functional groups are introduced by using comonomer such as glycidyl (meth)acrylate, hydroxy(alkyl) (meth)acrylates such as 2-hydroxyethyl (meth)acrylate, hydroxypropyl (meth)acrylate, hydroxybutyl (meth)acrylate and caprolactone (meth)acrylate; trialkoxysilyl (metha)crylates such as methacryloyloxymethyl trimethoxysilane, 3-methacryloyloxypropyl trimethoxysilane, methacryloyloxymethyl methyldimethoxysilane and 3-methacryloyloxypropyl triacetoxysilane; 2-(acetoacetoxy)ethyl (meth)acrylate, diacetone (meth)acrylamide, 2-isocyanatoethyl methacrylate and maleic anhydride. Preferred are silyl ester copolymers with a functionality of 1.2 to 2.5.

Examples of suitable curing agent for silyl ester copolymer with epoxy groups include the known amine based curing agents such as polyether amines, aliphatic and cycloaliphatic amines, amidoamines and polyamides.

Examples of suitable curing agent for silyl ester copolymer with hydroxy groups include the known isocyanate based curing agents such as monomeric isocyanates, polymeric isocyanates and isocyanate prepolymers.

The silyl ester copolymers of the invention may be moisture curable.

Preferred for use are curing agents with a functionality of 2 to 2.5.

It is preferred therefore if the curing agent is supplied separately to the rest of the antifouling coating composition to prevent curing before the coating has been applied to the object. Hence the coating composition of the invention can be supplied as a multipack (preferably two pack) formulation.

### Antifouling agent

The antifouling coating composition of the invention preferably contains at least one compound capable of preventing fouling on an object, i.e. an antifouling agent such as a biologically active agent, especially a biocide.

By biologically active agent/compound is meant any chemical compound that prevents the settlement of marine organisms on a surface, and/or prevents the growth of marine organisms on a surface and/or encourages the dislodgement of marine organisms from a surface. Examples of inorganic biologically active compounds include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic biologically active compounds include zinc 2-pyridinethiol-1-oxide [zinc pyrithione]; organocopper compounds such as copper 2-pyridinethiol-1-oxide [copper pyrithione], copper acetate, copper naphthenate, copper 8-quinolinonate [oxine-copper], copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylenebis(dithiocarbamate) complexed with zinc salt [mancozeb].

Examples of organic biologically active compounds include heterocyclic compounds such as 2-(*tert*-butylamino)-4-(cyclopropylamino)-6-(methylthio)-1,3,5-triazine [cybutryne], 4,5-dichloro-2-*n*-octyl-4-isothiazolin-3-one, 1,2-benzisothiazolin-3-one [DCOIT], 2-(thiocyanatomethylthio)-1,3-benzothiazole [benthiazole], 3-benzo[b]thien-2-yl-5,6-dihydro-1,4,2-oxathiazine 4-oxide [bethoxazin] and 2,3,5,6-tetrachloro-4-(methylsulphonyl)pyridine; urea derivatives such as 3-(3,4-dichlorophenyl)-1,1-dimethylurea [diuron]; amides and imides of carboxylic acids, sulphonic acids and sulphenic acids such as *N-*(dichlorofluoromethylthio)phthalimide, *N*-dichlorofluoromethylthio-*N'*,*N'*-dimethyl-*N*-phenylsulfamide [dichlofluanid], *N*-dichlorofluoromethylthio-*N'*,*N'*-dimethyl-*N-p*-tolylsulfamide [tolylfluanid] and *N*-(2,4,6-trichlorophenyl)maleimide; other organic compounds such as pyridine triphenylborane, amine triphenylborane, 3-iodo-2-propynyl *N*-butylcarbamate [iodocarb], 2,4,5,6-tetrachloroisophthalonitrile [chlorothalonil], *p*-((diiodomethyl)sulphonyl)toluene and 4-bromo-2-(4-chlorophenyl)-5-(trifluoromethyl)-1H-pyrrole-3-carbonitrile [tralopyril].

Other examples of biologically active agents may be tetraalkylphosphonium halogenides, guanidine derivatives, imidazole containing compounds such as 4-[1-(2,3-dimethylphenyl)ethyl]-1H-imidazole [medetomidine] and derivatives, macrocyclic lactones includes avermectins and derivatives thereof such as ivermectine and spinosyns and derivatives thereof such as spinosad, and enzymes such as oxidase, proteolytically, hemicellulolytically, cellulolytically, lipolytically and amylolytically active enzymes.

Preferred biologically active agents are cuprous oxide, copper thiocyanate, zinc 2-pyridinethiol-1-oxide, copper 2-pyridinethiol-1-oxide, zinc ethylenebis(dithiocarbamate), 2-(*tert*-butylamino)-4-(cyclopropylamino)-6-(methylthio)-1,3,5-triazine, 4,5-dichloro-2-*n*-octyl-4-isothiazolin-3-one, *N-*dichlorofluoromethylthio-*N'*,*N'*-dimethyl-*N*-phenylsulfamide, *N-*dichlorofluoromethylthio-*N'*,*N'*-dimethyl-*N*-*p*-tolylsulfamide and 4-bromo-2-(4-chlorophenyl)-5-(trifluoromethyl)-1H-pyrrole-3-carbonitrile.

Optionally the biologically active compounds may be encapsulated or adsorbed on an inert carrier or bonded to other materials for controlled release.

The biologically active compounds may be used alone or in mixtures. The use of these biologically active agents is known in antifouling coatings and their use would be familiar to the skilled man.

The total amount of biologically active agent in the antifouling compositions of the invention may be in the range 0.5 to 80 wt%, such as 1 to 70 wt%. It will be appreciated that the amount of this component will vary depending on the end use and the biologically active compound used.

In addition to the silyl ester copolymer and optional antifouling agent, the antifouling coating composition according to the present invention may optionally further comprise one or more components selected among other binders, pigments, extenders and fillers, additives, solvents and thinners.

An additional binder can be used to adjust the properties of the antifouling coating film. Examples of binders that can be used in addition to the silyl esters of the invention include
rosin materials such as wood rosin, tall oil rosin and gum rosin;
rosin derivatives such as hydrogenated and partially hydrogenated rosin, disproportionated rosin, dimerised rosin, polymerised rosin, esters of rosin and hydrogenated rosin, copper resinate, zinc resinate, calcium resinate, magnesium resinate and other metal resinates of rosin and polymerised rosin and others as described in WO97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
acid functional polymers of which the acid group is blocked with divalent metals bonded to a monovalent organic residue, for example as described in EP0204456 and EP0342276; or divalent metals bonded to a hydroxyl residue, for example as described in GB2311070 and EP0982324; or amine for example as described in EP0529693;
hydrophilic copolymers for example (meth)acrylate copolymers as described in GB2152947 and poly(*N*-vinyl pyrrolidone) copolymers and other copolymers as described in EP0526441;
(meth)acrylic polymers and copolymers, such as poly(*n*-butyl acrylate), poly(*n*-butyl acrylate-*co*-isobutyl vinyl ether) and other copolymers as described in WO03/070832 and EP2128208;
vinyl ether polymers and copolymers, such as poly(methyl vinyl ether), poly(ethyl vinyl ether), poly(isobutyl vinyl ether), poly(vinyl chloride-*co*-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP1033392 and EP1072625;
alkyd resins and modified alkyd resins; and
other condensation polymers as described in WO96/14362.

If the additional binder is rosin, resin acids, carboxylic acid compounds or derivatives thereof, it is preferred to make a two-pack formulation for improved storage stability and longer shelf life. One part contains the silyl ester copolymer and the other part contains the rosin, resin acids, carboxylic acid compounds or derivatives thereof. The two parts are mixed prior to use.

Dehydrating agents and desiccants contribute to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and desiccants that may be used in the antifouling coating compositions according to the present invention include organic and inorganic compounds. Examples of dehydrating agents and drying agents include anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-*tert*-butyl borate; silicates such as trimethoxymethyl silane, tetraethyl silicate and ethyl polysilicate; and isocyanates, such as p-toluenesulfonyl isocyanate.

The preferred dehydrating agents and drying agents are the inorganic compounds.

Other stabilizers that contribute to the storage stability of the antifouling coating composition are carbodiimide compounds, such as bis(2,6-diisopropylphenyl)carbodiimide and poly(1,3,5-triisopropylphenylene-2,4-carbodiimide) and others as described in patent application EP 12189636.9.

Examples of pigments include inorganic pigments such as titanium dioxide, iron oxides, zinc oxide, zinc phosphate and graphite; and organic pigments such as carbon black, phthalocyanine pigments and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as mineral fibres, mineral-glass fibres, wollastonite fibres, montmorillonite fibres, tobermorite fibres, atapulgite fibres, calcined bauxite fibres, volcanic rock fibres, bauxite fibres, rockwool fibres, processed mineral fibres from mineral wool, silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are polymeric plasticizers and polymeric flexibilizers, i.e. polymers and copolymers with glass transition temperatures below 20°C, chlorinated paraffins, phthalates, phosphate esters, sulphonamides, adipates and epoxidised vegetable oils.

In general, any of these optional components can be present in an amount ranging from 0.1 to 50 wt%, typically 0.5 to 20 wt%, of the antifouling composition. It will be appreciated that the amount of these optional components will vary depending on the end use.

It is highly preferred if the antifouling composition contains a solvent. This solvent is preferably volatile and is preferably organic. Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, *tert*-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran, alcohols such as *n*-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Preferred solvents are aromatic solvents, especially xylene and mixtures of aromatic hydrocarbons.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention should preferably have solids content above 40 vol%, e.g. above 45 % by volume, such as above 50 vol%, preferably above 55 vol%.

More preferably the antifouling coating composition should have a content of volatile organic compounds (VOC) below 500 g/L, preferably below 400 g/L, e.g. below 390 g/L. The VOC content can be measured on an antifouling coating having a curing agent added thereto or without such a curing agent. Where a curing agent is used, it is preferred if the VOC content of the mixture incorporating the curing agent is less than 400 g/L, more preferably less than 375 g/L, especially less than 350 g/L. VOC content can be calculated (ASTM D5201-01) or measured, preferably measured.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be defined with reference to the following non limiting examples and figures.

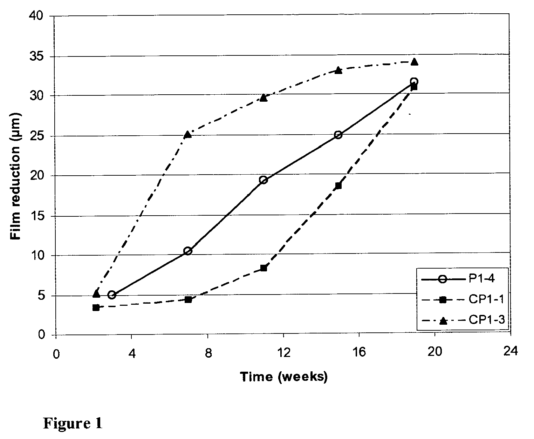

Figure 1 shows the antifouling coating composition P1-4 of the present invention has a linear polishing pattern compared to the comparative examples CP1-1 and CP 1-3 .

### Test methods

### Determination of polymer solution viscosity

The viscosity of the polymers are determined in accordance with ASTM D2196-10 using a Brookfield DV-I viscometer with LV-2 or LV-4 spindle at 12 rpm. The polymers are tempered to 23.0°C ± 0.5°C before the measurements.

### Determination of solids content of the polymer solutions

The solids content in the polymer solutions are determined in accordance with ISO 3251:2008. A test sample of 0.6 g ± 0.1 g are taken out and dried in a ventilated oven at 150°C for 30 minutes. The weight of the residual material is considered to be the non-volatile matter (NVM). The non-volatile matter content is expressed in weight percent. The value given is the average of three parallels.

### Determination of polymer average molecular weights distribution

The polymers are characterised by Gel Permeation Chromatography (GPC) measurement. The molecular weight distribution (MWD) was determined using a Polymer Laboratories PL-GPC 50 instrument with two PLgel 5 µm Mixed-D columns (300 x 7.5 mm) from Polymer Laboratories in series, tetrahydrofuran (THF) as eluent at ambient temperature and at a constant flow rate of 1 mL/min and with a refractive index (RI) detector. The columns were calibrated using polystyrene standards Easivials PS-H from Polymer Laboratories. The data were processed using Cirrus software from Polymer Labs.

Samples were prepared by dissolving an amount of polymer solution corresponding to 25 mg dry polymer in 5 mL THF. The samples were kept for minimum 3 hours at room temperature prior to sampling for the GPC measurements. The weight-average molecular weight (Mw), the number-average molecular weight (Mn) and the polydispersity index (PDI), given as Mw/Mn, are reported in the tables.

### Determination of the glass transition temperature

The glass transition temperature (Tg) is obtained by Differential Scanning Calorimetry (DSC) measurements. The DSC measurements were performed on a TA Instruments DSC Q200. Samples were prepared by transfer of a small amount of polymer solution to an aluminium pan and dry the samples for minimum 10 h at 50°C with subsequent 3 h at 150°C. The samples of approx. 10 mg dry polymer material were measured in open aluminium pans and scans were recorded at a heating rate of 10°C/min and cooling rate of 10°C/min with an empty pan as reference. The data were processed using Universal Analysis software from TA Instruments.

The inflection point of the glass transition range, as defined in ASTM E1356-08, of the second heating is reported as the Tg of the polymers.

### Determination of paint viscosity using Cone and Plate viscometer

The viscosity of the antifouling paint compositions are determined according to ISO 2884-1:2006 using a Cone and Plate viscometer set at a temperature of 23°C and providing viscosity measurement range of 0-10 P.

### Coating film hardness - König pendulum hardness

Pendulum hardness tests were performed according to ISO 1522:2006..

Each of the antifouling coating compositions was applied to a transparent glass plate (100×200×2 mm) using a film applicator with 300 µm gap size. The coating films were dried for 7 day at 23°C and then 1 day at 50°C. The coating film hardness of the dry coating film was measured at a temperature of 23°C and relative humidity of 50% using an Erichsen 299/300 pendulum hardness tester. The hardness is quantified as the number of pendulum swings to damp the amplitude from 6° to 3°.

### Determination of polishing rates of antifouling coating films in seawater

The polishing rate is determined by measuring the reduction in film thickness of a coating film over time. For this test PVC discs are used. The coating compositions are applied as radial stripes on the disc using a film applicator with 300 µm gap size. The thickness of the dry coating films are measured by means of a laser surface profiler. The PVC discs are mounted on a shaft and rotated in a container in which seawater is flowing through. Natural seawater which has been filtered and temperature-adjusted to 25°C ± 2°C is used. The PVC discs are taken out at regular intervals for measuring the film thickness. The discs are rinsed and allowed to dry overnight at room temperature before measuring the film thickness.

### Examples

### Monomer synthesis

A flask equipped with a stirrer, reflux condenser, dropping funnel and thermometer was charged with 0.4 mol of (meth)acrylic acid, 0.4 mol triethyl amine, 240 ml of xylene, and 0.26 g of 4-methoxyphenol. At room temperature, 0.40 mol of thexyldimethyl chlorosilane was added dropwise. After the completion of dropwise addition, the reaction solution was stirred for 5 hours at 50-55°C. The reaction solution was then cooled to room temperature. The precipitated amine salt was removed by filtration. The filtrate was washed once with cold, diluted acid (0.2M HCl), once with cold sodium hydrogen carbonate solution (0.4M NaHCO₃), once with cold distilled water and once with cold, saturated sodium chloride solution before drying with magnesium sulphate. 0.04 g of 4-methoxyphenol was added before the xylene was evaporated off under vacuum using a rotary evaporator. The crude product was analysed using GC/FID and contained thexyldimethylsilyl (meth)acrylate with 15-30% xylene. The crude product was used without further purification in the preparation of the copolymers.

### Determination of relative hydrolysis rates of silyl (meth)acrylate monomers

The method is based on the method described in EP1238980. In the experiments the aqueous solution was made without hydrogen chloride in order to reduce the hydrolysis rate, which made it easier to differentiate between the monomers.

Standard solutions were prepared for each experiment. 300µm of each component, including decane as internal reference, was weighed exactly and diluted to 25 mL in a volumetric bottle using dichloromethane as a solvent. 20 mL of rectified ethanol (approx. 95% ethanol and 5%water) was transferred to a vial with screw cap. 500 µL of a standard solution was added and the vial was shaken. 1µL of the mixed solution was withdrawn immediately and injected into the GC-MS. Time from mixing to the first injection was 90-100 seconds. Additional injections were done by autosampler when the previous injection was finished. In experiment No. 1 and 3 the samples were injected on a DB-35ms column. In experiment No. 2 the samples were injected on a DB-5 UI column. The different columns were used to obtain good separation between all monomers and silanol hydrolysis products.

The results of the experiments are given in Table 1.

**Table 1: Results of hydrolysis experiments.**

| **Experiment No**. | **Monomers in the solution** | **Degree of hydrolysis after 200 minutes** |
|---|---|---|
| 1 | Thexyldimethylsilyl acrylate | 68% |
| | Triisopropylsilyl acrylate | 42% |
| | Tri(n-butyl)silyl methacrylate | Completely hydrolysed in less than 40 minutes. |
| 2 | Thexyldimethylsilyl methacrylate | 25% |
| | Triisopropylsilyl methacrylate | 13% |
| | Tri(n-butyl)silyl methacrylate | Completely hydrolysed in less than 40 minutes. |
| 3 | n-Hexyldimethylsilyl methacrylate | Completely hydrolysed before the first injection. |
| | Triisopropylsilyl acrylate | 42% |
| | Tri(n-butyl)silyl methacrylate | Completely hydrolysed in less than 40 minutes. |

The results in table 1 show that the relative rates of hydrolysis are: n-hexyldimethylsilyl methacrylate >> tri(n-butyl)silyl methacrylate >> thexyldimethylsilyl acrylate > triisopropylsilyl acrylate > thexyldimethylsilyl methacrylate > triisopropylsilyl methacrylate.

Thus, the results show that the type of substituents on the silyl is important for the hydrolysis rate. The structurally different C6 substituents n-hexyl, as described in JP62178593 and JP62179514, and thexyl of the present invention give surprisingly different results.

### General procedure for preparation of copolymer solution B-1 to B-21

A quantity of solvent is charged to a temperature-controlled reaction vessel equipped with a stirrer, a condenser, a nitrogen inlet and a feed inlet. The reaction vessel is heated and maintained at the reaction temperature given in Table 2. A pre-mix of monomers, initiator and solvent is prepared. The pre-mix is charged to the reaction vessel at a constant rate over 2 hours under a nitrogen atmosphere. After a further 1 hour, post-addition of a boost initiator solution is added. The reaction vessel is maintained at the reaction temperature for a further 2 hours. The copolymer solution is then cooled to room temperature.

The ingredients of the compositions in parts by weight and the properties of the copolymer solutions are presented in Table 2.

### Preparation of copolymer solutions CB-1 to CB-3

Production examples 1 to 3 of EP2360213 were repeated to prepare comparative copolymer solutions CB-1 to CB-3.

Following the procedure of EP2360213 a quantity of solvent is charged to a temperature-controlled reaction vessel equipped with a stirrer, a condenser, a nitrogen inlet and a feed inlet. The reaction vessel is heated and maintained at 100°C. A pre-mix of monomers and initiator is prepared and added dropwise to the reaction vessel over a period of 1 hour under a nitrogen atmosphere. The reaction solution is maintained at 100°C for 2 hours. Then a post-addition of a boost initiator is added 3 times with 2-hours intervals. After that solvent is added for thinning and the reaction vessel is cooled to room temperature.

The ingredients of the compositions in parts by weight and the properties of the copolymer solutions are presented in Table 3.

### Preparation of copolymer solution CB-5

Production example S-3 / Comparative example H-3 of EP1342756 was repeated to prepare comparative copolymer solution CB-5.

Following the procedure of EP1342756 a quantity of solvent is charged to a temperature-controlled reaction vessel equipped with a stirrer, a condenser, a nitrogen inlet and a feed inlet. The reaction vessel is heated and maintained at 85°C. A pre-mix of monomers and initiator is prepared and added dropwise to the reaction vessel over a period of 2 hour under a nitrogen atmosphere. The reaction solution is maintained at 85°C for 4 hours. Further a post-addition of a boost initiator is added and the reaction is continued at the same temperature for 4 hours. After that the reaction vessel is cooled to room temperature.

The ingredients of the composition in parts by weight and the properties of the copolymer solution are presented in Table 3.

### Preparation of copolymer solutions CB-4 and CB-6

The general procedure for preparation of copolymer solution described above was followed to prepare comparative examples CB-4 and CB-6. The monomer composition of copolymer solution CB-4 is the same as described in Example 3a to 3c of WO2005/005516.

The ingredients of the compositions in parts by weight and the properties of the copolymer solutions are presented in Table 3.

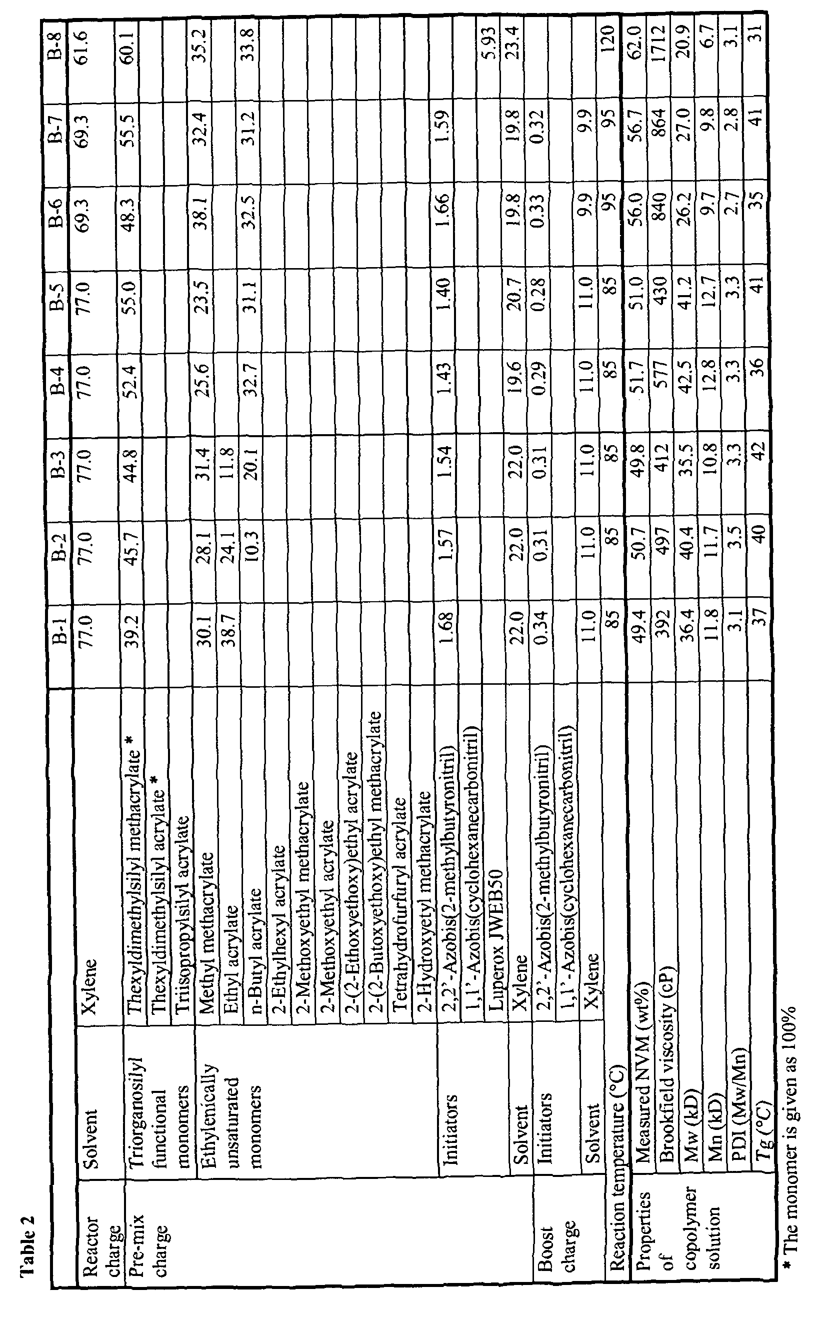

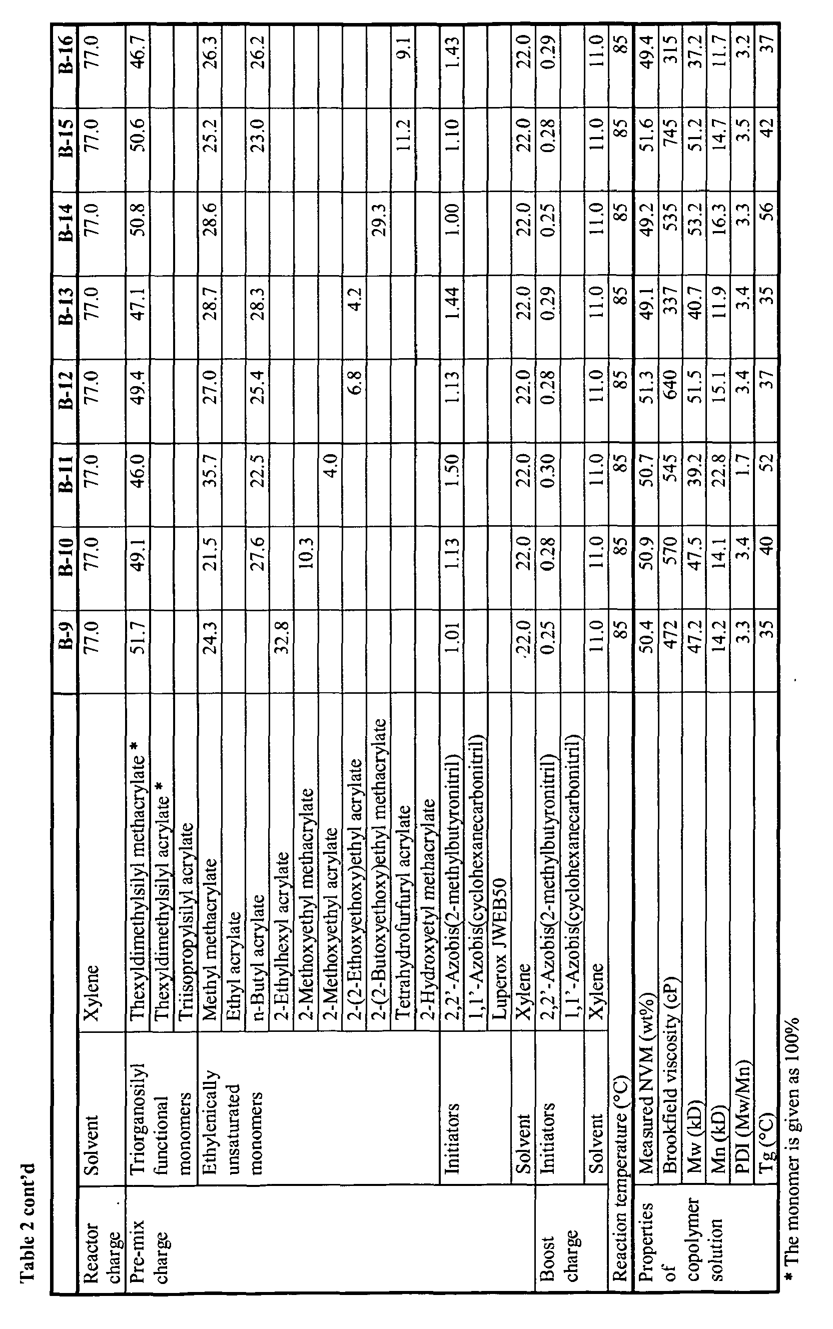

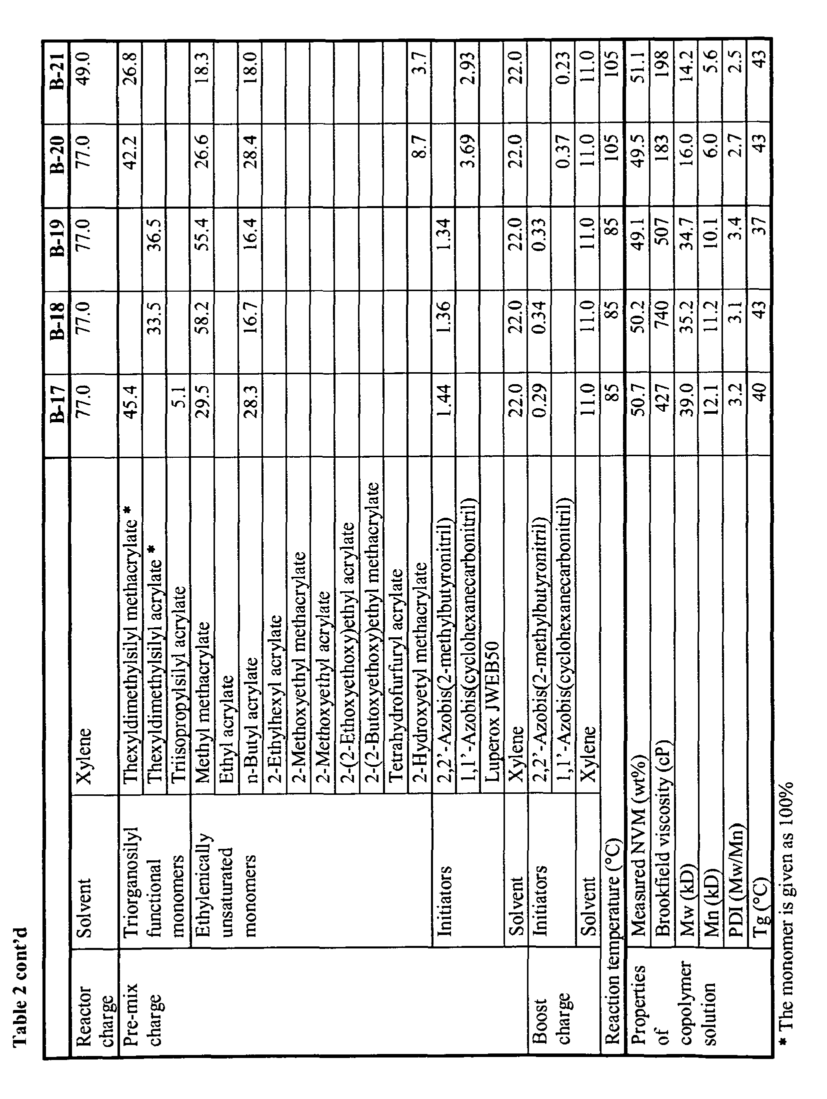

**Table 3**

| | | | **CB-1** | **CB-2** | **CB-3** | **CB-4** | **CB-5** | **CB-6** |
|---|---|---|---|---|---|---|---|---|
| Reactor charge | Solvent | Xylene | 55.2 | 55.2 | 52.2 | 84.0 | 84.0 | 84.0 |
| | Triorganosilyl functional monomers | Triisopropylsilyl methacrylate | 55.2 | 60.0 | 64.8 | | | |
| | | Triisopropylsilyl acrylate | | | | 71.1 | | |
| | | Tri(n-butyl)silyl methacrylate | | | | | 59.2 | 53.3 |
| | Ethylenically unsaturated monomers | Methyl methacrylate | 7.2 | 7.2 | 7.2 | 39.1 | 59.2 | 54.5 |
| | | Ethyl acrylate | 7.2 | | 7.2 | | | |
| | | n-Butyl acrylate | | 7.2 | | | | 10.7 |
| | | 2-Methoxyethyl methacrylate | 50.4 | 45.6 | 40.8 | | | |
| | | 2-Methoxyethyl acrylate | | | | 8.3 | | |
| | Initiators | 2,2'-Azobis(2-methylbutyronitril) | | | | 1.20 | | 1.22 |
| | | 2,2'-Azobisisobutyronitril | | | | | 1.18 | |
| | | t-Butyl peroxy-2-ethylhexanoate | 0.96 | 0.96 | 0.96 | | | |
| | Solvent | Xylene | | | | 24.0 | 24.0 | 24.0 |
| Boost charge | Initiators | 2,2'-Azobis(2-methylbutyronitril) | | | | 0.30 | | 0.30 |
| | | 2,2'-Arobisisobutyronitril | | | | | 0.47 | |
| | | t-Butyl peroxy-2-ethylhexanoate | 3 x 0.24 | 3 x 0.24 | 3 x 0.24 | | | |
| | Solvent | Xylene | | | | 12.0 | 12.0 | 12.0 |
| Thinning | Solvent | Xylene | 64.8 | 64.8 | 64.8 | | | |
| Reaction temperature (°C) | | | 100 | 100 | 100 | 85 | 85 | 85 |
| Properties of copolymer solution | Measured NVM (wt%) | | 51.3 | 50.0 | 50.1 | 50.3 | 49.5 | 50.2 |
| | Brookfield viscosity (cP) | | 660 | 430 | 415 | 165 | 494 | 480 |
| | Mw (kD) | | 67.1 | 61.8 | 59.3 | 28.7 | 36.6 | 42.2 |
| | Mn (kD) | | 22.4 | 20.5 | 20.1 | 7.4 | 15.4 | 14.3 |
| | PDI (Mw/Mn) | | 3.0 | 3.0 | 3.0 | 3.9 | 2.4 | 3.0 |
| | Tg (°C) | | 33 | 30 | 30 | 35 | 46 | 36 |

### General procedure for preparation of antifouling coating compositions

The components were mixed in the proportions given in Table 4. The mixture was dispersed in the presence of an appropriate amount of glass beads (3-4 mm in diameter) in a paint can of 250 ml using a vibrational paint shaker for 15 minutes. The glass beads were filtered of before testing.

The paint different formulations are listed in Table 4 to Table 8. The ingredients are given in parts by weight.

**Table 4: Antifouling coating compositions**

| **Ingredients** | | **Examples** | | | | | | | **Comparative examples** | | |
|---|---|---|---|---|---|---|---|---|---|---|---|
| | | **P1-1** | **P1-2** | **P1-3** | **P1-4** | **P1-5** | **P1**-**6** | **P1-7** | **CP1-1** | **CP1-2** | **CP1-3** |
| Silyl copolymer | Silyl copolymer solution No. | B-6 | B-7 | B-9 | B-10 | B-11 | B-12 | B-15 | C-4 | C-5 | C-6 |
| | Silyl copolymer solution | 25.2 | 24.9 | 28.0 | 27.7 | 27.8 | 27.5 | 27.3 | 28.0 | 28.1 | 28.4 |
| Biocides | Copper(II) oxide | 45.0 | 45.0 | 45.0 | 45.0 | 45.0 | 45.0 | 45.0 | 45.0 | 45.0 | 45.0 |
| | Copper pyrithione | 3.0 | 3.0 | 3.0 | 3.0 | 3.0 | 3.0 | 3.0 | 3.0 | 3.0 | 3.0 |
| | Zinc pyrithione | - | - | - | - | - | - | - | - | - | - |
| | Tralopyril | - | - | - | - | - | - | - | - | - | - |
| Pigment and extenders | Naphtol red ⁽³⁾ | - | - | - | - | - | - | - | - | - | - |
| | Iron oxide red | 2.0 | 2.0 | 2.0 | 2.0 | 2.0 | 2.0 | 2.0 | 2.0 | 2.0 | 2.0 |
| | Titanium dioxide | 1.0 | 1.0 | 1.0 | 1.0 | 1.0 | 1.0 | 1.0 | 1.0 | 1.0 | 1.0 |
| | Talc | 2.0 | 2.0 | 2.0 | 2.0 | 2.0 | 2.0 | 2.0 | 2.0 | 2.0 | 2.0 |
| | Zinc oxide | 2.0 | 2.0 | 2.0 | 2.0 | 2.0 | 2.0 | 2.0 | 2.0 | 2.0 | 2.0 |
| Additives | Polyamide wax (20% in xylene) ⁽⁴⁾ | 2.0 | 2.0 | 2.0 | 2.0 | 2.0 | 2.0 | 2.0 | 2.0 | 2.0 | 2.0 |
| | Tetraethoxysilane | 1.0 | 1.0 | 1.0 | 1.0 | 1.0 | 1.0 | 1.0 | 1.0 | 1.0 | 1.0 |
| | Bis(2,6-diisopropylphenyl)carbodiimide | - | - | - | - | - | - | - | - | - | - |
| Solvent | Xylene | 13.1 | 13.4 | 10.3 | 10.6 | 10.5 | 10.8 | 11.0 | 10.3 | 10.2 | 9.9 |

| | | | | | | | | | | | |
|---|---|---|---|---|---|---|---|---|---|---|---|
| (3) Novoperm Red F2RK 70 (4) Disparlon A603-20X | | | | | | | | | | | |

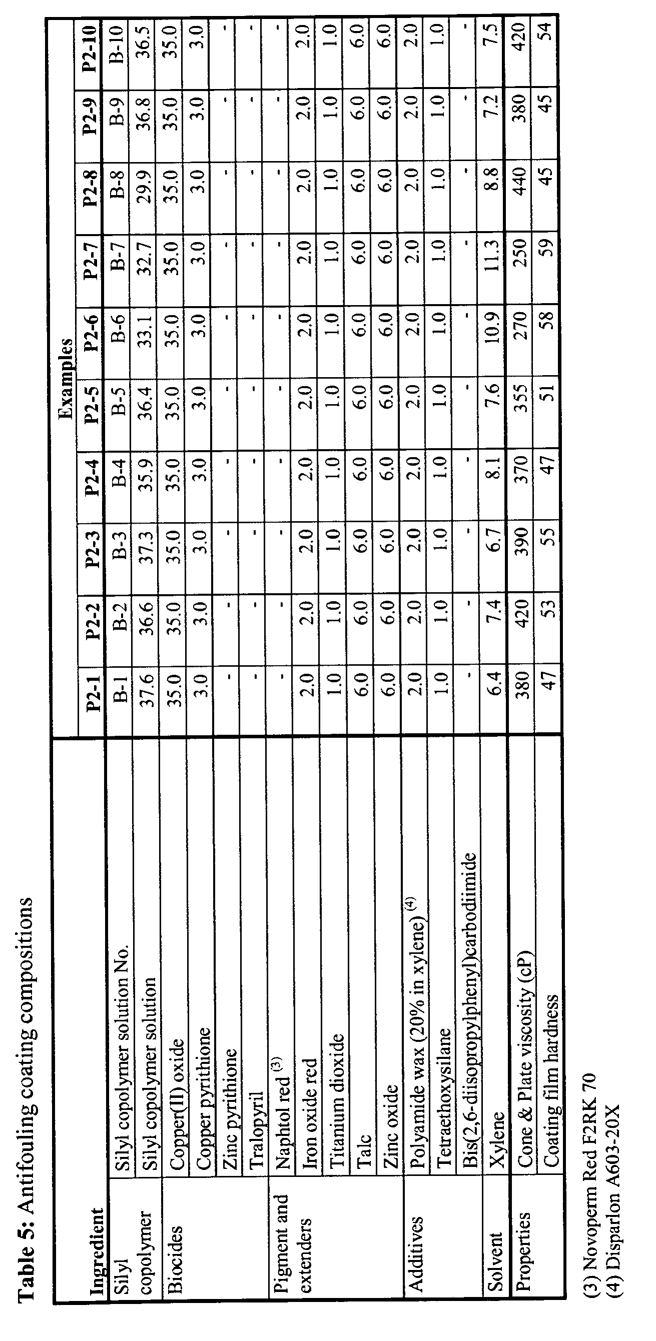

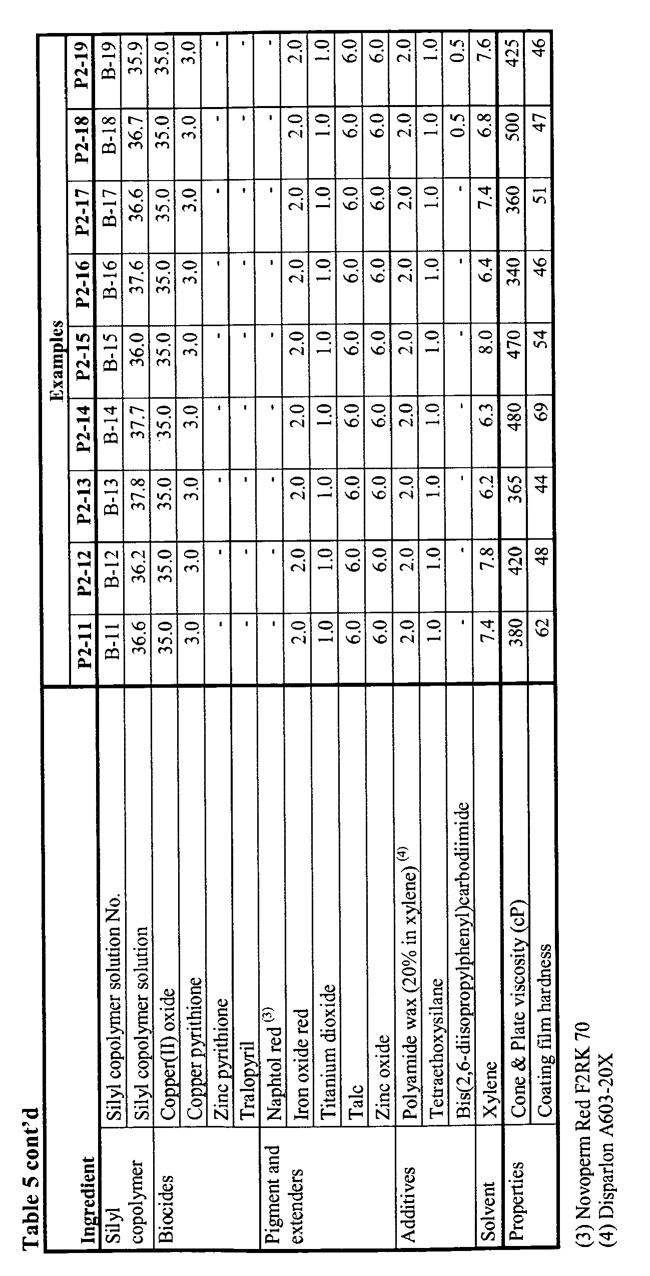

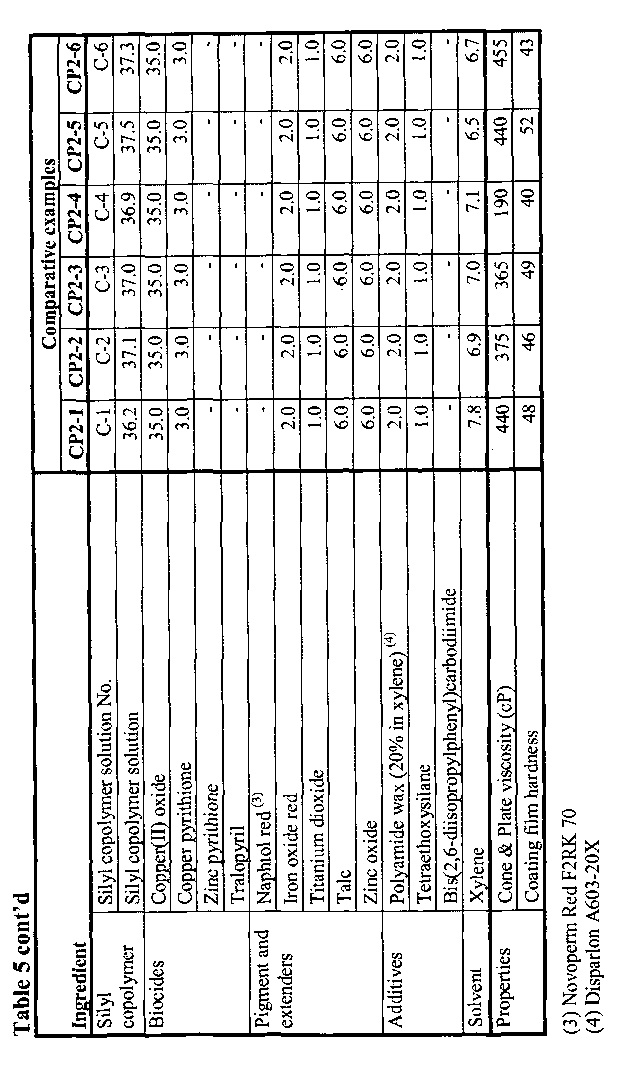

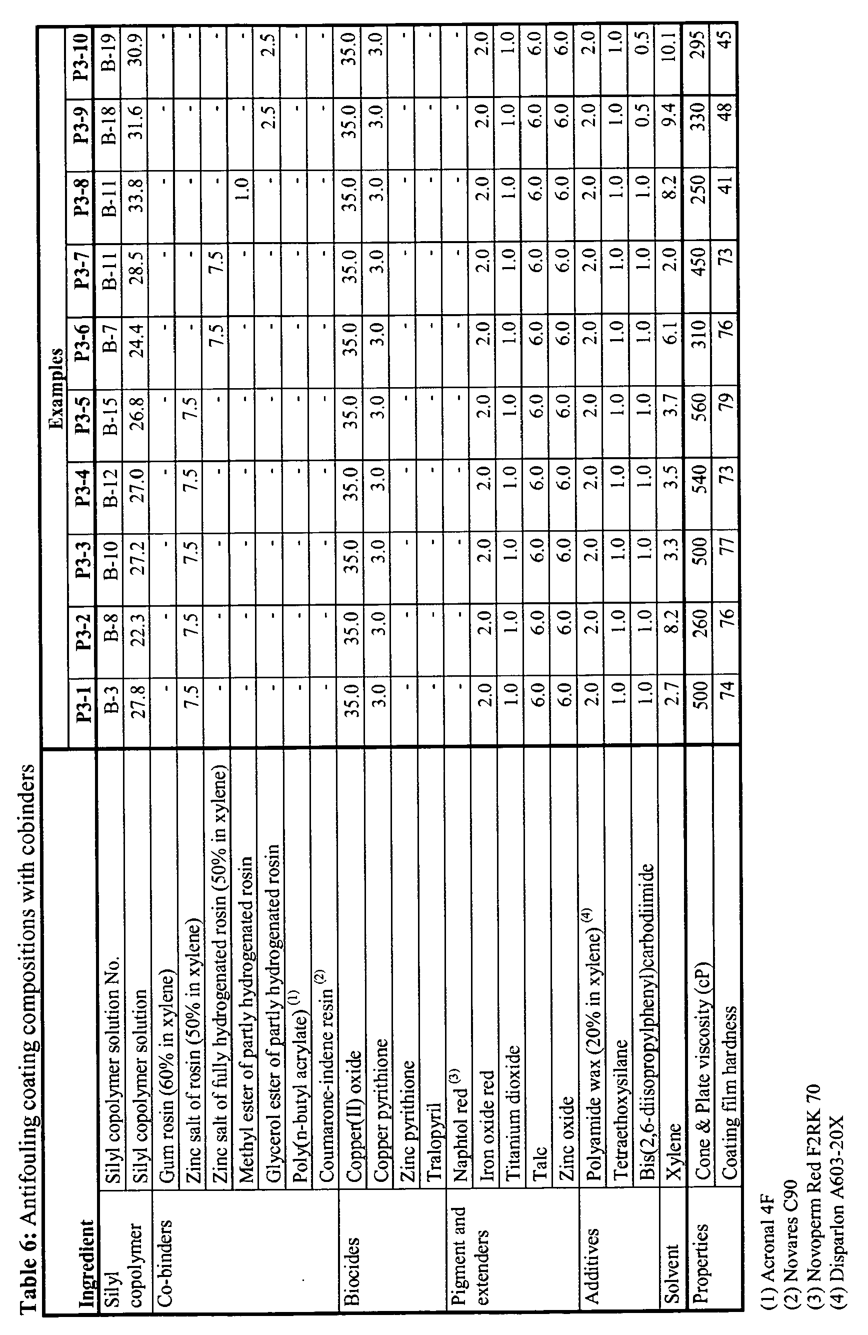

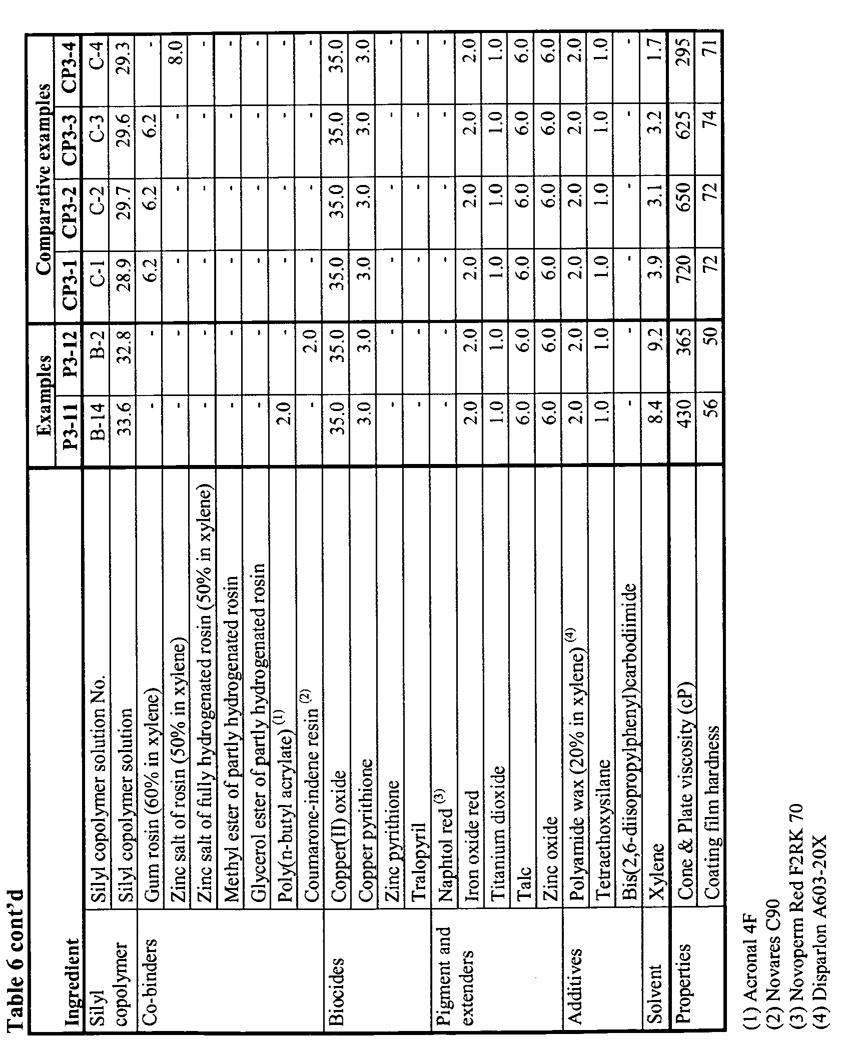

**Table 7: Copper-free antifouling coating compositions**

| **Ingredient** | | **Examples** | | | | | | | |
|---|---|---|---|---|---|---|---|---|---|
| | | **P4-1** | **P4-2** | **P4-31** | **P4-4** | **P4-5** | **P4-6** | **P4-7** | **P4-8** |
| Silyl copolymer | Silyl copolymer solution No. | B-4 | B-5 | B-6 | B-9 | B-11 | B-13 | B-16 | B-17 |
| | Silyl copolymer solution | 49.2 | 49.9 | 45.5 | 50.5 | 50.2 | 51.9 | 51.5 | 50.2 |
| Biocides | Copper(II) oxide | - | - | - | - | - | - | - | - |
| | Copper pyrithione | - | - | - | - | - | - | - | - |
| | Zinc pyrithione | 5.0 | 5.0 | 5.0 | 5.0 | 5.0 | 5.0 | 5.0 | 5.0 |
| | Tralopyril | 3.0 | 3.0 | 3.0 | 3.0 | 3.0 | 3.0 | 3.0 | 3.0 |
| Pigment and extenders | Naphtol red ⁽³⁾ | 0.5 | 0.5 | 0.5 | 0.5 | 0.5 | 0.5 | 0.5 | 0.5 |
| | Iron oxide red | 5.0 | 5.0 | 5.0 | 5.0 | 5.0 | 5.0 | 5.0 | 5.0 |
| | Titanium dioxide | - | - | - | - | - | - | - | - |
| | Talc | 14.0 | 14.0 | 14.0 | 14.0 | 14.0 | 14.0 | 14.0 | 14.0 |
| | Zinc oxide | 10.0 | 10.0 | 10.0 | 10.0 | 10.0 | 10.0 | 10.0 | 10.0 |
| Additives | Polyamide wax (20% in xylene) ⁽⁴⁾ | 2.0 | 2.0 | 2.0 | 2.0 | 2.0 | 2.0 | 2.0 | 2.0 |
| | Tetraethoxysilane | 1.0 | 1.0 | 1.0 | 1.0 | 1.0 | 1.0 | 1.0 | 1.0 |
| | Bis(2,6-diisopropylphenyl)carbodiimide | 1.0 | 1.0 | 1.0 | 1.0 | 1.0 | 1.0 | 1.0 | 1.0 |
| Solvent | Xylene | 9.3 | 8.6 | 13.0 | 8.0 | 8.3 | 6.6 | 7.0 | 8.3 |
| Properties | Cone & Plate viscosity (cP) | 420 | 375 | 600 | 420 | 455 | 390 | 380 | 380 |
| | Coating film hardness | 38 | 43 | 44 | 35 | 56 | 35 | 35 | 41 |

| | | | | | | | | | |
|---|---|---|---|---|---|---|---|---|---|
| (3) Novoperm Red F2RK 70 (4) Disparlon A603-20X | | | | | | | | | |

**Table 8: Curable antifouling coating compositions**

| | **Ingredient** | | **Examples** | |
|---|---|---|---|---|
| | | | **P5-1** | **P5-2** |
| | Silyl copolymer | Silyl copolymer solution No. | B-20 | B-21 |
| | | Silyl copolymer solution | 39.3 | 38.1 |
| | Biocides | Copper(II) oxide | 38.5 | 38.5 |
| | | Copper pyrithione | 3.3 | 3.3 |
| | | Zinc pvrithione | - | - |
| | | Tralopyril | - | - |
| | Pigment and extenders | Naphtol red ⁽³⁾ | - | - |
| **Comp. A** | | Iron oxide red | 2.2 | 2.2 |
| | | Titanium dioxide | 1.1 | 1.1 |
| | | Talc | 6.6 | 6.6 |
| | | Zinc oxide | 6.6 | 6.6 |
| | Additives | Polyamide wax (20% in xylene) ⁽⁴⁾ | 2.0 | 2.0 |
| | | Tetraethoxvsilane | - | - |
| | | Bis(2,6-diisopropylphenyl)carbodiimide | - | - |
| | Solvent | Xylene | 0.4 | 1.6 |
| **Comp. B** | Curing agent | Desmodur VL50 | 3.4 | 2.2 |
| **Properties** | Cone & Plate viscosity (cP) - Comp. A | | 710 | 540 |
| | Coating film hardness - cured film | | 80 | 76 |

| | | | | |
|---|---|---|---|---|
| (3) Novoperm Red F2RK 70 (4) Disparlon A603-20X | | | | |

**Table 9: Results of polishing**

| **Paint formulation** | **Polishing pattern** | **Estimated polishing rate (µm/year)** |
|---|---|---|
| P1-1 | linear | 15 |
| P1-2 | linear | 35 |
| P1-3 | linear | 15 |
| P1-4 | linear | 90 |
| P1-5 | linear | 50 |
| P1-6 | linear | 100 |
| P1-7 | linear | 90 |
| CP1-1 | non-linear | n.a. |
| CP1-2 | polished through after 2-6 weeks | n.a. |
| CP1-3 | non-linear | n.a. |

## Claims

1. A silyl ester copolymer comprising the reaction product of a silyl ester monomer of formula (I) 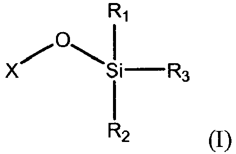
wherein X is acryloyloxy group, methacryloyloxy group, (methacryloyloxy)alkylcarboxy group, (acryloyloxy)alkylcarboxy group, maleinoyloxy group, fumaroyloxy group, itaconoyloxy group or citraconoyloxy group;
R₁ is a methyl or ethyl group;
R₂ is a methyl or ethyl group;
R₃ is a branched C5-8 alkyl group having at least two branches;
with at least one non silyl ester monomer, e.g. methyl methacrylate.

2. A silyl ester copolymer as claimed in claim 1 wherein said silyl ester monomer is of formula (II) 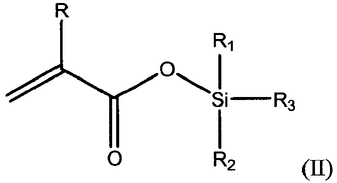
wherein R is H or methyl, preferably Me;
R₁ is a methyl or ethyl group;
R₂ is a methyl or ethyl group;
R₃ is a branched C5-8 alkyl group having at least two branches.

3. A silyl ester copolymer as claimed in any preceding claim wherein said silyl ester monomer is of formula (III) 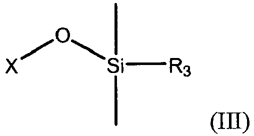 where X and R₃ are as hereinbefore defined.

4. A silyl ester copolymer as claimed in any preceding claim wherein said silyl ester monomer is of formula (IV) 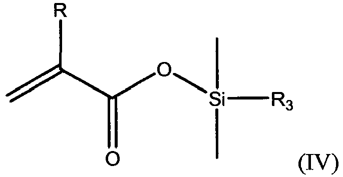 where R and R₃ are as hereinbefore defined.

5. A silyl ester copolymer as claimed in any preceding claim wherein R₃ is 2,3-dimethyl-2-butyl (thexyl).

6. A silyl ester copolymer as claimed in any preceding claim wherein said silyl ester monomer is of formula (V) 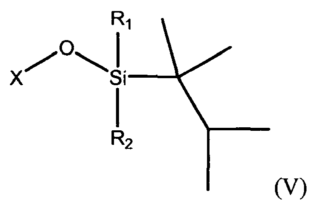 preferably 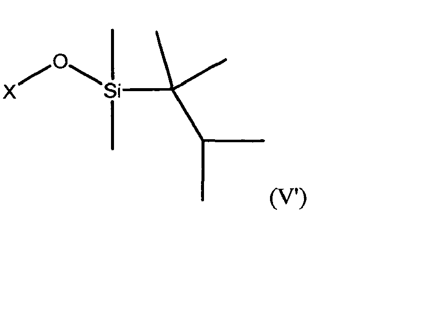 wherein X, R₁ and R₂ are as hereinbefore defined.

7. A silyl ester copolymer as claimed in any preceding claim wherein said silyl ester monomer is of formula (VI): 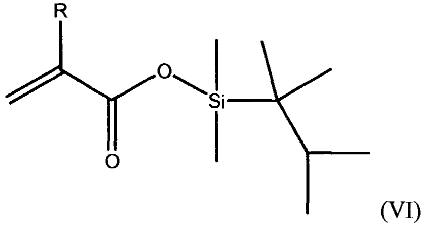 wherein R is Me or H, preferably R is Me.

8. A silyl ester copolymer as claimed in any preceding claim wherein said non-silyl ester monomer is an acrylate or methacrylate monomer.

9. A silyl ester copolymer as claimed in any preceding claim wherein said non-silyl ester monomer is 2-methoxyethyl (meth)acrylate, tetrahydrofurfuryl (meth)acrylate, 2-(2-ethoxyethoxy)ethyl (meth)acrylate, 2-(2-butoxyethoxy)ethyl (meth)acrylate, ethyl (meth)acrylate, n-butyl acrylate, 2-ethylhexyl acrylate, or methyl (meth)acrylate.

10. A silyl ester copolymer as claimed in any preceding claim wherein residues of monomer (I) form 20 to 60 wt% of the silyl ester copolymer..

11. A silyl ester copolymer as claimed in any preceding claim wherein no silyl monomers other than those of formula (I) are present.

12. A process for the preparation of a silyl ester copolymer as hereinbefore defined comprising polymerising a monomer of formula (I) with at least one non silyl ester monomer, e.g. methyl methacrylate.

13. An antifouling coating composition comprising a silyl ester copolymer and an antifouling agent; wherein said silyl ester copolymer is as claimed in claim 1 to 11.

14. An antifouling coating as claimed in claim 13 which is free of rosin or derivatives thereof, ideally wherein the silyl ester copolymer is the only binder present.

15. An object coated with an anti-fouling coating composition as claimed in claim 1 to 11.

## Patentansprüche

1. Silylester-Copolymer, umfassend das Reaktionsprodukt eines Silylester-Monomers der Formel (I) 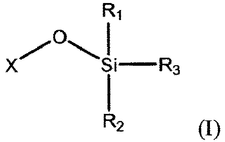
worin X eine Acryloyloxy-Gruppe, Methacryloyloxy-Gruppe, (Methacryloyloxy)alkylcarboxy-Gruppe, (Acryloyloxy)alkylcarboxy-Gruppe, Maleinoyloxy-Gruppe, Fumaroyloxy-Gruppe, Itaconoyloxy-Gruppe oder Citraconoyloxy-Gruppe ist;
R₁ eine Methyl- oder Ethyl-Gruppe ist;
R₂ eine Methyl- oder Ethyl-Gruppe ist;
R₃ eine verzweigte C5-8 Alkyl-Gruppe ist, die mindestens zwei Verzweigungen aufweist; mit mindestens einem Nicht-Silylester-Monomer, z.B. Methylmethacrylat.

2. Silylester-Copolymer nach Anspruch 1, wobei das Silylester-Monomer die Formel (II) aufweist 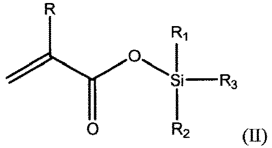
worin R H oder Methyl, vorzugsweise Me, ist;
R₁ eine Methyl- oder Ethyl-Gruppe ist;
R₂ eine Methyl- oder Ethyl-Gruppe ist;
R₃ eine verzweigte C5-8 Alkyl-Gruppe ist, die mindestens zwei Verzweigungen aufweist.

3. Silylester-Copolymer nach einem vorangehenden Anspruch, wobei das Silylester-Monomer die Formel (III) aufweist 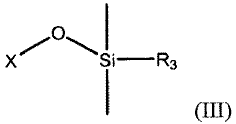 worin X und R₃ wie hierin vorstehend definiert sind.

4. Silylester-Copolymer nach einem vorangehenden Anspruch, wobei das Silylester-Monomer die Formel (IV) aufweist 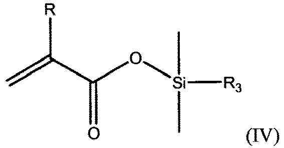 worin R und R₃ wie hierin vorstehend definiert sind.

5. Silylester-Copolymer nach einem vorangehenden Anspruch, wobei R₃ 2,3-Dimethyl-2-butyl (t-Hexyl) ist.

6. Silylester-Copolymer nach einem vorangehenden Anspruch, wobei das Silylester-Monomer die Formel (V) aufweist 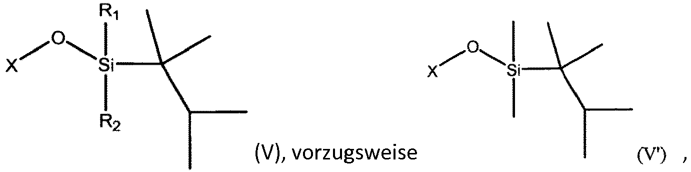 worin X, R₁ und R₂ wie hierin vorstehend definiert sind.

7. Silylester-Copolymer nach einem vorangehenden Anspruch, wobei das Silylester-Monomer die Formel (VI) aufweist: 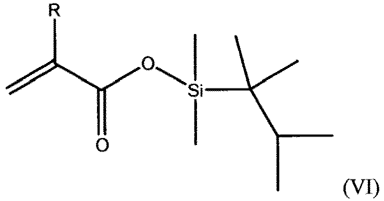 worin R Me oder H ist, R vorzugsweise Me ist.

8. Silylester-Copolymer nach einem vorangehenden Anspruch, wobei das Nicht-Silylester-Monomer ein Acrylat- oder Methacrylat-Monomer ist.

9. Silylester-Copolymer nach einem vorangehenden Anspruch, wobei das Nicht-Silylester-Monomer 2-Methoxyethyl-(meth)acrylat, Tetrahydrofurfuryl-(meth)acrylat, 2-(2-Ethoxyethoxy)ethyl-(meth)acrylat, 2-(2-Butoxyethoxy)ethyl-(meth)acrylat, Ethyl-(meth)acrylat, n-Butyl-acrylat, 2-Ethylhexyl-acrylat oder Methyl-(meth)acrylat ist.

10. Silylester-Copolymer nach einem vorangehenden Anspruch, wobei Reste von Monomer (I) 20 bis 60 Gew.-% des Silylester-Copolymers bilden.

11. Silylester-Copolymer nach einem vorangehenden Anspruch, wobei keine Silyl-Monomere, die von jenen der Formel (I) verschieden sind, vorliegen.

12. Verfahren zur Herstellung eines Silylester-Copolymers, wie hierin vorstehend definiert, umfassend Polymerisieren eines Monomers der Formel (I) mit mindestens einem Nicht-Silylester-Monomer, z.B. Methylmethacrylat.

13. Bewuchshindernde Beschichtungszusammensetzung, umfassend ein Silylester-Copolymer und ein bewuchshinderndes Mittel; wobei das Silylester-Copolymer nach Anspruch 1 bis 11 ist.

14. Bewuchshindernde Beschichtung nach Anspruch 13, welche frei von Kolophonium oder Derivaten davon ist, wobei das Silylester-Copolymer idealerweise das einzige vorliegende Bindemittel ist.

15. Gegenstand, beschichtet mit einer bewuchshindernden Beschichtungszusammensetzung nach Anspruch 1 bis 11.

## Revendications

1. Copolymère d'ester de silyle comprenant le produit de réaction d'un monomère d'ester de silyle de formule (I) 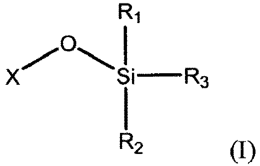
dans laquelle X est un groupe acryloyloxy, un groupe méthacryloyloxy, un groupe (méthacryloyloxy)alkylcarboxy, un groupe (acryloyloxy)alkylcarboxy, un groupe maléinoyloxy, un groupe fumaroyloxy, un groupe itaconoyloxy ou un groupe citraconoyloxy;
R₁ est un groupe méthyle ou éthyle;
R₂ est un groupe méthyle ou éthyle;
R₃ est un groupe alkyle ramifié en C5-8 ayant au moins deux ramifications ;
avec au moins un monomère qui n'est pas un ester de silyle, par ex. un méthacrylate de méthyle.

2. Copolymère d'ester de silyle selon la revendication 1 dans lequel ledit monomère d'ester de silyle est de formule (II) 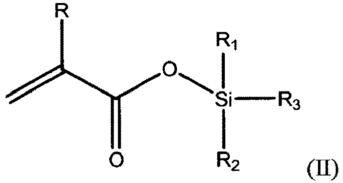
dans laquelle R est H ou méthyle, de préférence Me ;
R₁ est un groupe méthyle ou éthyle;
R₂ est un groupe méthyle ou éthyle;
R₃ est un groupe alkyle en C5-8 ramifié, ayant au moins deux ramifications.

3. Copolymère d'ester de silyle selon l'une quelconque des revendications précédentes dans lequel ledit monomère d'ester de silyle est de formule (III) 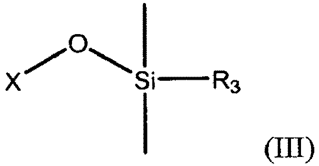 où X et R₃ sont tels que définis ci-dessus.

4. Copolymère d'ester de silyle selon l'une quelconque des revendications précédentes dans lequel ledit monomère d'ester de silyle est de formule (IV) 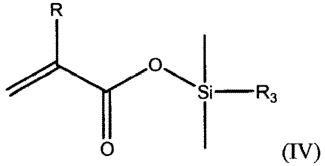 où R et R₃ sont tels que définis ci-dessus.

5. Copolymère d'ester de silyle selon l'une quelconque des revendications précédentes dans lequel R₃ est le 2,3-diméthyl-2-butyl (thexyl).

6. Copolymère d'ester de silyle selon l'une quelconque des revendications précédentes dans lequel ledit monomère d'ester de silyle est de formule (V) 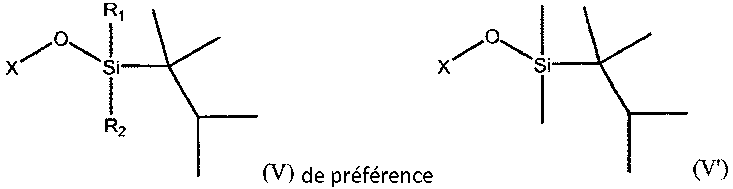 dans laquelle X, R₁ et R₂ sont tels que définis ci-dessus.

7. Copolymère d'ester de silyle selon l'une quelconque des revendications précédentes dans lequel ledit monomère d'ester de silyle est de formule (VI) : 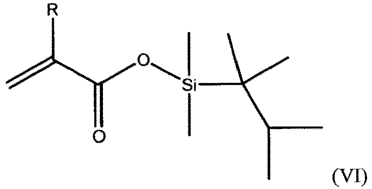 dans laquelle R est Me ou H, de préférence R est Me.

8. Copolymère d'ester de silyle selon l'une quelconque des revendications précédentes dans lequel ledit monomère qui n'est pas un ester de silyle est un monomère acrylate ou méthacrylate.

9. Copolymère d'ester de silyle selon l'une quelconque des revendications précédentes dans lequel ledit monomère qui n'est pas un ester de silyle est le 2-méthoxéthyl (méth)acrylate, le tétrahydrofurfuryl (méth)acrylate, le 2-(2-éthoxyéthoxy)éthyl (méth)acrylate, le 2-(2-butoxyéthoxy)éthyl (méth)acrylate, l'éthyl (méth)acrylate, le n-butyl acrylate, le 2-éthylhexyl acrylate, ou le méthyl (méth)acrylate.

10. Copolymère d'ester de silyle selon l'une quelconque des revendications précédentes dans lequel les résidus de monomère (I) forment 20 à 60 % en poids du copolymère d'ester de silyle.

11. Copolymère d'ester de silyle selon l'une quelconque des revendications précédentes dans lequel aucun monomère de silyle autres que ceux de formule (I) n'est présent.

12. Procédé de préparation d'un copolymère d'ester de silyle tel que défini ci-dessus comprenant polymériser un monomère de formule (I) avec au moins un monomère qui n'est pas un ester de silyle ; par ex. un méthacrylate de méthyle.

13. Composition de revêtement antifouling comprenant un copolymère d'ester de silyle et un agent antifouling ; dans lequel ledit copolymère d'ester de silyle est tel que revendiqué dans une des revendication 1 à 11.

14. Revêtement antifouling selon la revendication 13 qui est exempt de rosin ou de ses dérivés, idéalement dans lequel le copolymère d'ester de silyle est le seul liant présent.

15. Objet revêtu d'une composition antifouling tel que revendiqué dans une des revndications 1 à 11.
